# EUROPEAN PATENT SPECIFICATION

(11) **EP 1 785 340 B1**
(45) Date of publication and mention of the grant of the patent: **28.07.2010**
(21) Application number: 06023512.4
(22) Date of filing: 13.11.2006
(51) Int. Cl.: B62D 65/06, B21D 39/02, B23K 13/02, B23K 28/02, B62D 25/10

(54) **Apparatus for fixing the elements of a panel for a motor vehicle body and method for fixing such elements**
Vorrichtung zum Fixieren von Elementen von einem Kraftfahrzeugaufbau, und ein Verfahren dazu
Appareil pour fixer des éléments d'un panneau d'une carrosserie de véhicule automobile et sa méthode

(30) Priority: 14.11.2005 IT TO20050803
(43) Date of publication of application: 16.05.2007
(73) Proprietor: KGR S.p.A., 10032 Brandizzo (Torino) (IT)
(72) Inventor: Simioli, Marco, 10040 Almese, Torino (IT)
(74) Representative: Cian, Paolo

(56) References cited:
- EP-A- 1 442 819
- DE-A1- 19 618 255
- US-A- 4 128 449
- US-A- 5 683 027

## Description

The present invention refers to an apparatus for fixing the elements of a panel for a motor vehicle body.

In the process for fixing the elements of the panels for a motor vehicle body, the so-called "sheet metal working" step, a pair of elements are usually used, one of which, the so-called skeleton, has mainly the function of supporting and resisting structure, while the other one, consisting of an outer cover panel, has mainly a shape function.

Usually, these elements are fixed by seaming their perimetric edges, after having interposed between the two elements, at the edges to be seamed, a polymeric adhesive usually of the thermosetting type that, after having been subject to polymerization, allows to permanently connect the two elements.

After the two elements of the panel have been joined by seaming, they are usually welded by means of a projection welding process at predetermined areas of the panel, using indirect projection welding tools for example of the type disclosed by EP-1 442 819. In this case, the polymerization of the adhesive interposed between the elements of the panel takes place during a step following to the welding one, when, after the panel has been mounted on the motor vehicle body during the so-called "hinged panels fitting" step, the whole motor vehicle is subjected to a painting step and subsequently heated to a temperature of the order of 200°C to obtain the polymerization of the paint, during which the polymeric adhesive interposed between the elements of the panel reaches the complete polymerization condition.

Recently, motor vehicles must satisfy particularly strict standards not only as far as the safety of the passengers, but also for the safety of possible pedestrians involved in road accidents. For this purpose, the panels of the body of the motor vehicles, for example the frontal panels such as the hatch of the front bonnet, must have a high elasticity in order to be able to accept wide deformations so as to reduce the possible damages to pedestrians. The same panels must however be sufficiently rigid in order not to undergo excessive deformations during the assembly thereof on the body during the "hinged panels fitting" step, so that the continuity of the shape with the other panels is not lost.

The above mentioned known process for the conventional panels, which only includes the projection welding of the elements of a panel, is not sufficient to assure the rigidity of the panels of the modern motor vehicles desired for the "hinged panels fitting" step. In the attempt to obviate this drawback, sometimes a different process is used to fix the elements, which includes, instead of the projection welding of the two elements, the arrangement of the panel in a heating apparatus, typically of the induction type, with its elements already seamed, which heats the edges of the panel where the adhesive has been applied, to a temperature lower than the polymerization temperature, that is close to 180°C, while the elements of the panel are kept in a predetermined position by locking and reference tools. In this manner, the polymeric adhesive is brought to a pre-polymerization condition so that the two panels are kept fastened along their perimetic edges. However, also this process is not satisfactory because the heating of the adhesive, although able to confer to the panel a structural rigidity greater than that which can be obtained with the welding points only, causes in the majority of the cases a deformation of the whole panel structure that often cannot be recovered in the following "hinged panels fitting" step, and that may require that already assembled panels are scraped owing to their excessive deformation.

It is known from DE-196 18 255 a method for connecting sheet panels using induction heating to accelerate polymerisation and ensure the complete curing of the adhesive material interposed between the panels, in order to get a permanent connection of the elements of a panel.

The object of the invention is to overcome the drawbacks of the above mentioned prior art.

In particular, the invention starts from the idea to combine the two above mentioned known techniques of "sheet metal working" of the panels for the motor vehicle body, so as to take advantage from the benefits which can be obtained from each of them, and to perform these two techniques in a single apparatus so that the costs for the process turn out to be acceptable for the mass production.

More particularly, the invention reaches the above mentioned object by means of a fixing apparatus such as defined in the annexed claims.

By virtue of this idea of solution, the apparatus of the invention allows to obtain panels for a motor vehicle body, in which the geometry between the skeleton and the covering of the panel is assured so that the panel can only be at the most subject to limited deformations, in order that its optimal assembly on the body during the following "hinged panels fitting" step is allowed, and with an increased mechanical resistance and structural stiffness. Since both the connecting techniques of the elements of a panel are performed on a same apparatus, the costs are remarkably reduced with respect to the case in which two single apparatuses are used, each intended to perform a single fixing step, and to drastically reduce the time with respect to the separate execution of the two processes, as well as to keep the geometry of the panel unchanged during fixing the elements thereof, since the same centering and reference tools can be continuously used without any need to interrupt their operation between the execution of the two fixing steps. Moreover, in the same fixing apparatus the same units for supporting the elements of the panel are advantageously used, which still contributes to keep stable the preset geometry of the panel.

The use of a such apparatus allows also to remarkably reduce design, production and manufacturing costs of its components as well as of their installation, with respect to the possible use of two independent structures.

Moreover, an object of the invention is a method for fixing of elements of a panel for the motor vehicle body.

The invention will turn out to be more clear from the following detailed description, which has been made with reference to the appended drawings which show a preferred embodiment provided as a non-limitative example, and in which:

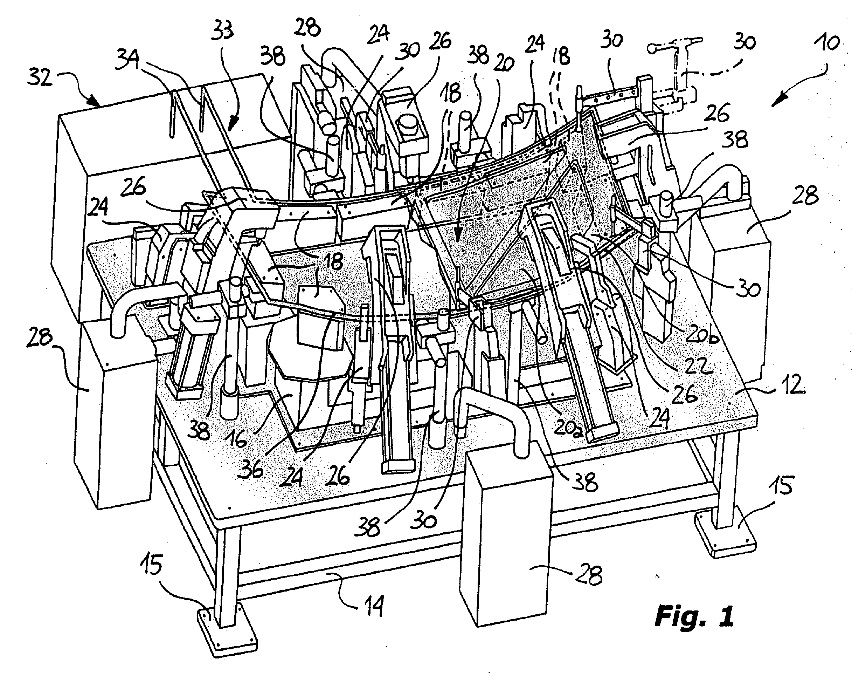

- figure 1 is a schematic perspective view of an apparatus according to the invention,

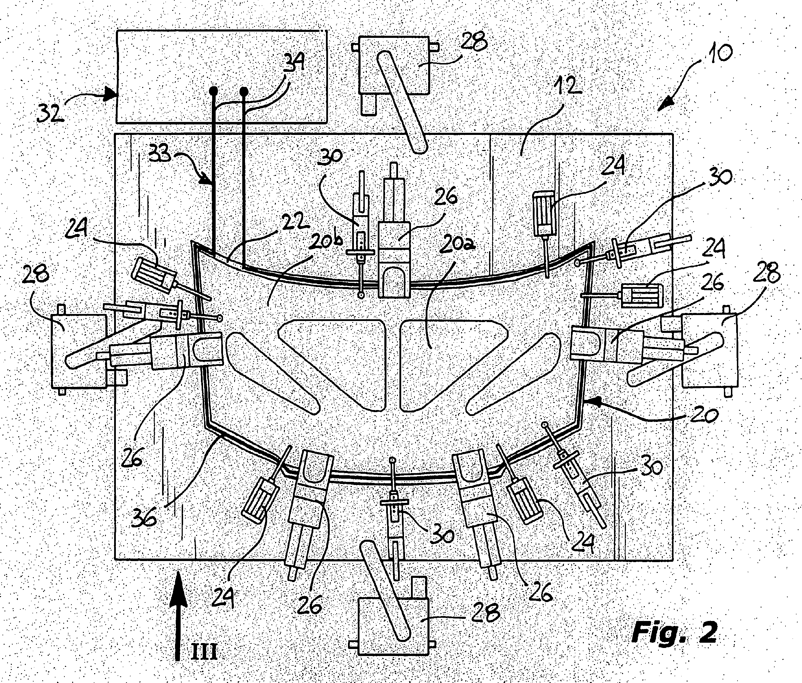

- figure 2 is a top elevational view of the apparatus of figure 1,
- figure 3 is an enlarged side elevational view of a detail indicated by arrow III in figure 2, and
- figure 4 is an enlarged side sectional view of a detail indicated by arrow IV in figure 3.

With reference to the figures, an apparatus for fixing the elements of a composite panel for a motor vehicle body, is indicated 10 as a whole.

The apparatus 10 comprises a base or bench which includes a platform 12 supported by a base structure 14 provided with a series of support feet 15 for resting on the ground.

A support frame 16 is fixed on the platform 12, which supports a series of blocks 18 of non-magnetic material, for example of insulating material, which constitute a shaped support structure adapted to allow to lay a composite panel 20 for the body of a motor vehicle, for example, with reference to the figures, the hatch of the front bonnet of a motor vehicle, at least on its perimetral zone.

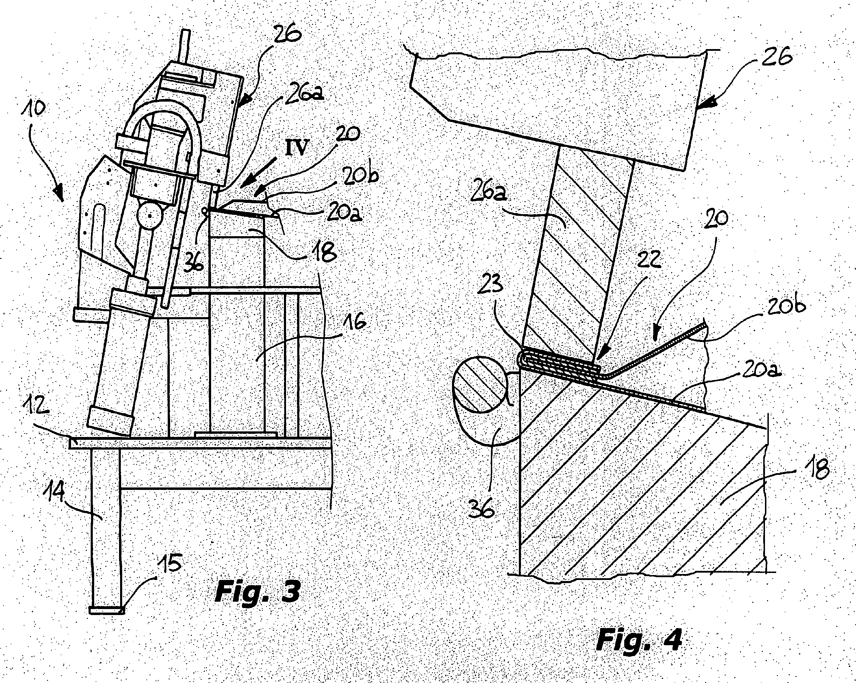

The panel 20 comprises a plurality of sheet elements, usually two, to be fixed to each other, typically an outer covering panel 20a and an inner reinforcing skeleton 20b. These elements are usually connected to each other by means of a preliminary seaming operation performed along the perimetral edges of the panel 20, in such a manner that an edge of the covering panel 20a is folded on the perimetral edge of the skeleton 20b, so that the two elements 20a and 20b are connected to each other. Before the elements 20a and 20b ere joined together and mutually connected by seaming, a polymeric adhesive 23, typically of the thermosetting type, is applied between their perimetral edges (see figure 4), which constitutes a kind of gasket interposed between the edges of the two elements.

The shaped support structure constituted by the support frame 16 and the blocks 18, defines a shape corresponding to that one the composite panel 20 will have to assume once it will be assembled in a definitive manner.

Moreover, a series of reference and locking tools 24, usually pneumatically or electrically driven, are arranged on the platform 12, each of which comprises an arm which can be oscillated between a raised resting position and a lowered locking position. The tools 24, when their arm are in the lowered position, after the pre-assembled panel 20 has been laid on the blocks 18, withhold the panel 20 and its elements 20a and 20b in a stable configuration, in view of the execution of the fixing step of such elements.

The platform 12 supports also a series of welding tools 26, preferably of the electrical indirect projection type, for welding the elements 20a and 20b at design predetermined locations. Each welding tool 26 includes a head which supports a welding electrode 26a (figures 3 and 4) and is movable between an active position in which the electrode 26a rests on an edge portion of the panel 20, and an inactive position, raised and withdrawn with respect to the blocks 18, in which the easy positioning and removal of the composite panel 20 from above, before and after the execution of the assembly steps thereof, is made possible. A welding apparatus of this type is described in the European patent application EP-A-1 442 819, in the name of the same Applicant.

Pressing electrodes 30 are associated with the welding tools 26 in order to allow to close the electrical circuit with the welding electrode 26a through the sheet elements 20a and 20b, during the welding step. Each pressing electrode 30 is carried by a respective oscillating arm in order to be able to assume, in the resting condition, a raised and withdrawn position allowing to put or remove the composite panel 20 from above with respect to the blocks 18.

The welding units comprising the tools 26 and the pressing electrodes 30 are electrically connected with transformers indicated by numeral reference 28, which are arranged sideways on the platform 12.

An induction heating tool, indicated 33 as a whole, is associated with the platform 12, and comprises a heat generator 32 connected with a supply and cooling unit (not shown), from which a pair of tubular ducts 34 extend, which are joined with a tubular structure 36 supported by a series of columnar supports 38 and is shaped so as to fully surround the series of blocks 18 in order to be arranged, when a panel 20 is associated with the apparatus 10, in a position adjacent all over the perimetral edge of such a panel or only to some of its portions, depending on where the adhesive 23 is located.

In a manner known per se, the tubular ducts 34 and 36 have an inner cavity for allowing a cooling fluid to flow and are coursed by a high frequency current for inducing a magnetic flow and causing the induction heating of the elements 20a and 20b of the panel 20, up to a temperature of almost 180 °C, which is enough to cause a pre-polymerization of the adhesive 23 interposed between the elements 20a and 20b. In particular, the tubular duct 36 is interposed between the non-magnetic blocks 18 and the welding apparatus 26 and is conveniently arranged more adjacent to the edge of the panel 20 and substantially spaced from the welding tool 26, in such a manner that such a tool does not undergo any appreciable heating, so that no interference with its operation is caused.

An electronic control unit (not shown in the figures), manages as a whole and according to preset times the coordinated operation of the reference and locking tools 24, of the welding tools 26 and of the induction heating tool 33, once the pre-assembled panel 20 has been positioned on the blocks 18. The control unit can be independent, if the apparatus 10 operates in an independent manner, or can be integrated in a general control unit of an assembly line, if the apparatus 10 forms part of a group of apparatuses of an automated assembly line of motor vehicles bodies, which can be selectively operated in succession.

In the operation of the apparatus 10, a panel 20 with the respective elements already seamed at their peripheral edges, is laid from the above on the blocks 18, in a predetermined position for fixing it. In this condition, both the reference and locking tools 24, and the welding tools 26 with the respective pressing electrodes 30 are all in their raised and withdrawn configuration with respect to the shaped support structure of the panel 20 defined by the blocks 18.

The control unit of the apparatus 10 controls therefore the lowering of the arms of the reference and locking tools 24, so that the elements 20a and 20b can be locked in the fixing position.

When the elements 20a and 20b are referenced and locked in the correct position of welding, the control unit operates the welding tools 26 in such a manner that their electrodes 26a perform respective weldings at predetermined zones of the panel 20, after that the pressing electrodes 30 have been lowered in order to be brought into contact with the sheet of the skeleton 20b.

At the end of the welding step, the tools 26 and the respective electrodes 30 are brought back in their raised and withdrawn resting position, and therefore the control unit controls the operation of the induction heating tool 33 in order to heat the edges thereof, in order that the polymeric adhesive 23 is brought in a pre-polymerization condition, such as to allow that the structure of the panel 20 assumes a geometrically stable configuration, rigid and resistant enough that the subsequent assembly steps of the panel 20 can be brought to a conclusion on the body of the motor vehicle.

When the process of fixing the elements 20a and 20b of a panel 20 ends, the control unit attend to interrupt the activation of the heating tool 33 and to bring the reference and locking tools 24 back in their resting positions, raised and withdrawn with respect to the support structure 16, 18, in order that the removal of the fixed panel 20 and the feeding of a new panel 20 to be fixed with the apparatus 10 is allowed.

## Claims

1. Apparatus for fixing the elements of a panel for a motor vehicle body, comprising:
- a base (12, 14),
- a shaped support structure (16, 18) supported by the base (12, 14), for supporting a composite panel (20) which includes at least two sheet elements (20a, 20b) to be fixed to each other,
- welding means (26) associated with the support structure (16, 18) and intended to weld said at least two sheet elements (20a, 20b) at predetermined zones, and
- reference and locking means (24) of the sheet elements (20a, 20b), associated with the support structure (16, 18) and adapted to assure positioning and reciprocal locking of the sheet elements (20a, 20b) when the welding means (26) are operated,
**characterized in that** said sheet elements (20a, 20b) of the composite panel (20) includes a skeleton (20b) and a covering panel (20a) pre-assembled by seaming portions (22) at their perimetral edges, a polymeric adhesive (23) being interposed between respective portions of said sheet elements (20a, 20b), and **in that** induction heating means (33) are supported by said base (12, 14) and associated with the support structure (16, 18), an electronic control unit being associated with the apparatus (10) for controlling and coordinating operation of said welding means (26), of said reference and locking means (24) and of said induction heating means (33) so that, while the sheet elements (20a, 20b) are locked by the reference and locking means (24), the portions of the composite panel (20) in which said polymeric adhesive (23) is located are heated to a preset temperature in order that only a pre-polymerization condition of said adhesive (23) is attained, the induction heating means (33) being therefore solely able to pre-polymerize said adhesive (23).

2. Apparatus according to claim 1, **characterized in that** said shaped support structure (16, 18) comprises a series of blocks of non-magnetic material, supported (18) by a support frame (16).

3. Apparatus according to claim 1 or 2, **characterized in that** the adhesive (23) is interposed between the skeleton. (20b) and the covering panel (20a), in the proximity of the edges of the composite panel (20), and **in that** the induction heating means (33) comprise a tubular heating tool (36) which extends in the proximity of the portions of the perimetral edge (22) of the composite panel (20) in which said adhesive (23) is applied.

4. Apparatus according to claim 3, **characterized in that** the tubular heating tool (36) is shaped in a manner corresponding to the perimetral edge (22) of the composite panel (20), and is arranged so that it surrounds completely or only some lengths of such an edge (22).

5. Apparatus according to claim 3 or 4, **characterized in that** the tubular heating tool (36) is interposed between the support structure (16, 18) and the welding means (26), and **in that** it is arranged more adjacent to the edge of the panel (20) in order to be substantially separated from the welding means (26).

6. Method for fixing the elements of a panel for a motor vehicle body, comprising the steps of:
- arranging a composite panel (20) consisting of at least two sheet elements (20a, 20b) to be fixed to each other, particularly including a skeleton (20b) and a covering panel (20a), said elements (20a, 20b) being pre-assembled by seaming portions (22) of their perimetral edges, a polymeric adhesive (23) being interposed between the sheet elements (20a, 20b) at least at some portions of their edges,
- arranging the composite panel (20) with the respective elements (20a, 20b) pre-assembled, on a correspondingly shaped support structure (16, 18) of an apparatus (10),
- locking the elements (20a, 20b) of the composite panel (20) in a preset position by means of reference and locking means (24) associated with said apparatus (10), in order to assure positioning and reciprocal locking of said elements (20a, 20b) in their fixing condition with respect to said support structure (16, 18),
- welding the elements (20a, 20b) of the composite panel (20) at predetermined zones by welding means (26) associated with said apparatus (10),
- heating the composite panel (20) at portions thereof in which said polymeric adhesive (23) is located, by induction heating means (33) associated with the support structure (16, 18), and
- controlling by an electronic control unit the operation of at least said induction heating means (33), while the sheet elements (20a, 20b) are locked by said reference and locking means (24), in order that they reach a temperature such that the adhesive (23) is brought only to a pre-polymerization condition.

7. Method according to claim 6, **characterized in that** the step of heating the portions of the composite panel (20) at which the polymeric adhesive (23) is located, is performed immediately after the welding step.

8. Method according to claim 7, **characterized in that** the step of heating the composite panel (20) is performed at part or at all the perimetral edge thereof.

9. Method according any one of claims 6 to 8, **characterized in that** said electronic control unit operates also the reference and locking means (24), the welding means together with the induction heating means (33), in a coordinated manner and according to preset timings.

10. Method according any one of claims 6 to 9, **characterized in that** it is carried out in an apparatus (10) according to any one of claims 1 to 5.

## Patentansprüche

1. Vorrichtung zum gegenseitigen Befestigen von Elementen eines Kraftfahrzeug-Karosseriebleches, umfassend
- ein Untergestell (12, 14),
- eine auf dem Untergestell (12, 14) angebrachte, schablonierte Tragstruktur (16, 18) für die Abstützung eines mehrteiligen Karosseriebleches (20), das aus wenigstens zwei miteinander zu verbindenden Blechelementen (20a, 20b) zusammengesetzt ist,
- Schweißorgane (26), die der Tragstruktur (16, 18) zugeordnet sind und dazu dienen, die wenigstens zwei Blechelemente (20a, 20b) an vorbestimmten Stellen miteinander zu verschweißen,
- Referenz- und Haltemittel (24) für die Blechelemente (20a, 20b), die der Tragestruktur (16, 18) zugeordnet sind und eine Positionierung und gegenseitige Fixierung der Blechelemente (20a, 20b) bei der Betätigung der Schweißorgane (26) gewährleisten,
**dadurch gekennzeichnet, dass** die Blechelemente (20a, 20b) des mehrteiligen Karosseriebleches (20) ein Gerippe (20b) und ein Verkleidungspaneel (20a) umfassen, die an ihren Außenrändern durch Falzabschnitte (22) vormontiert sind, wobei ein Polymerkleber (23) zwischen die entsprechenden Abschnitte der Blechelemente (20a, 20b) einbracht ist, und dass das Untergestell (12, 14) Induktionsheizorgane (33) trägt, die der Tragstruktur (16, 18) zugeordnet sind, wobei die Vorrichtung (10) eine elektronische Steuereinheit zur Steuerung und Koordinierung des Betriebs der Schweißorgane (26), der Referenz- und Haltemittel (24) und der Induktionsheizorgane (33) aufweist, derart, dass während der Fixierung der Blechelemente (20a, 20b) durch die Referenz- und Haltemittel (24) die Abschnitte des mehrteiligen Karosseriebleches (20), in die der Polymerkleber (23) eingebracht ist, auf eine vorbestimmte Temperatur erhitzt werden, so dass nur eine Vorpolymerisation des Klebers (23) erzeugt wird, wozu die Induktionsheizorgane (33) nur für eine Vorpolymerisation des Klebers (23) ausgelegt sind.

2. Vorrichtung nach Anspruch 1, **dadurch gekennzeichnet, dass** die schablonierte Tragstruktur (16, 18) eine Reihe von Blöcken (18) aus nichtmagnetischem Werkstoff aufweist, die an einem Tragrahmen (16) angebracht sind.

3. Vorrichtung nach Anspruch 1 oder 2, **dadurch gekennzeichnet, dass** der Kleber (23) zwischen das Gerippe (20b) und das Verkleidungspaneel (20a) in der Nähe der Kanten des mehrteiligen Karosseriebleches (20) eingebracht ist und dass die Induktionsheizorgane (33) eine rohrförmige Heizeinrichtung (36) aufweisen, die sich in der Nähe der Abschnitte des Außenrandes (22) des mehrteiligen Karosseriebleches (20) erstreckt, wo der Kleber (23) aufgebracht ist.

4. Vorrichtung nach Anspruch 3, **dadurch gekennzeichnet, dass** die rohrförmige Heizeinrichtung (36) eine dem Außenrand (22) des mehrteiligen Karosseriebleches (20) entsprechende Form hat und so angeordnet ist, dass sie den Außenrand (22) vollständig oder abschnittsweise umschließt.

5. Vorrichtung nach Anspruch 3 oder 4, **dadurch gekennzeichnet, dass** die rohrförmige Heizeinrichtung (36) zwischen die Tragstruktur (16, 18) und die Schweißorgane (26) eingesetzt ist und näher am Rand des Karosseriebleches (20) liegt, so dass sie einen Abstand von den Schweißorganen (26) hat.

6. Verfahren zum gegenseitigen Befestigen von Elementen eines Kraftfahrzeug-Karosseriebleches mit den folgenden Arbeitsschritten:
- Bereitstellen eines mehrteiligen Karosseriebleches (20) mit wenigstens zwei miteinander zu verbindenden Blechelementen (20a, 20b), die insbesondere ein Gerippe (20b) und ein Verkleidungspaneel (20a) umfassen und die an ihren Außenrändern durch Falzabschnitte (22) vormontiert werden, wobei ein Polymerkleber (23) wenigstens an einigen Abschnitten zwischen die Ränder der Blechelemente (20a, 20b) eingebracht wird,
- Aufsetzen des mehrteiligen Karosseriebleches (20) mit seinen vormontierten Blechelementen (20a, 20b) auf eine entsprechend geformte Tragstruktur (16, 18) einer Vorrichtung (10),
- Fixieren der Elemente (20a, 20b) des mehrteiligen Karosseriebleches (20) in einer vorbestimmten Lage mit Hilfe von Referenz- und Haltemitteln (24) der Vorrichtung (10), wodurch eine Positionierung und gegenseitige Fixierung der Elemente (20a, 20b) relativ zu der Tragstruktur (16, 18) gewährleistet wird,
- Verschweißen der Elemente (20a, 20b) des mehrteiligen Karosseriebleches (20) an vorbestimmten Stellen mit Hilfe von Schweißorganen (26) der Vorrichtung (10),
- Erhitzen des mehrteiligen Karosseriebleches (20) an den Stellen, an denen sich der Polymerkleber (23) befindet, mit Hilfe von Induktionsheizorganen (33), die sich an der Tragstruktur (16, 18) befinden,
- Steuerung der Operation von wenigstens dem Heizorgan (33) mittels einer elektronischen Steuereinheit, während die Blechelemente (20a, 20b) durch die Referenz- und Haltemittel (24) fixiert werden, so dass diese Elemente eine solche Temperatur erreichen, dass der Kleber (23) nur die Bedingungen für eine Vorpolymerisation erfährt.

7. Verfahren nach Anspruch 6, **dadurch gekennzeichnet, dass** das Aufheizen der Abschnitte des mehrteiligen Karosseriebleches (20), an denen sich der Polymerkleber (23) befindet, unmittelbar nach dem Schweißen durchgeführt wird.

8. Verfahren nach Anspruch 7, **dadurch gekennzeichnet, dass** das Aufheizen des mehrteiligen Karosseriebleches (20) auf einem Teil oder der Gesamtheit des Außenrandes des Karosseriebleches erfolgt.

9. Verfahren nach einem der Ansprüche 6 bis 8, **dadurch gekennzeichnet, dass** die elektronische Steuereinheit auch die Referenz- und Haltemittel (24) sowie die Schweißorgane und die Induktionsheizorgane (33) nach einem vorgegebenen Zeitablauf koordiniert steuert.

10. Verfahren nach einem der Ansprüche 6 bis 9, **dadurch gekennzeichnet, dass** dieses in einer Vorrichtung (10) nach einem der Ansprüche 1 bis 5 durchgeführt wird.

## Revendications

1. Appareil pour fixer les éléments d'un panneau pour une carrosserie de véhicule à moteur, comportant :
- une embase (12, 14),
- une structure de support (16, 18) à forme adaptée, supportée par l'embase (12, 14), destinée à recevoir un panneau composite (20) qui inclut au moins deux éléments de tôle (20a, 20b) devant être fixés l'un à l'autre,
- des moyens de soudage (26) associés à la structure de support (16, 18) et destinés à souder au moins deux desdits éléments de tôle (20a, 20b) en des zones prédéterminées, et
- des moyens (24) de référence et d'immobilisation des éléments de tôle (20a, 20b), associés à la structure de support (16, 18) et adaptés pour assurer le positionnement et l'immobilisation réciproque des éléments de tôle (20a, 20b) lorsque les moyens de soudage (26) sont actionnés,
**caractérisé en ce que** lesdits éléments de tôle (20a, 20b) du panneau composite (20) incluent une armature (20b) et un panneau de couverture (20a) préassemblés par des parties d'assemblage (22) à leurs bords périphériques, un adhésif polymère (23) étant interposé entre les parties respectives desdits éléments de tôle (20a, 20b), et **en ce que** les moyens (33) de chauffage par induction sont placés sur ladite embase (12, 14) et associés à la structure de support (16, 18), un boîtier de commande électronique étant associé à l'appareil (10) pour commander et coordonner le fonctionnement desdits moyens de soudage (26), desdits moyens (24) de référence et d'immobilisation, et desdits moyens (33) de chauffage par induction de sorte que, lorsque les éléments de tôle (20a, 20b) sont immobilisés par le dispositif (24) de référence et d'immobilisation, les parties du panneau composite (20) dans lesquelles ledit adhésif polymère (23) est situé sont chauffées à une température préréglée de telle sorte que seulement un état de pré-polymérisation dudit adhésif (23) soit atteint, les moyens (33) de chauffage par induction étant par conséquent seulement aptes à pré-polymériser ledit adhésif (23).

2. Appareil selon la revendication 1, **caractérisé en ce que** ladite structure de support (16, 18) à forme adaptée comporte une série de blocs de matériau non magnétique, supportés (18) par un châssis de support (16).

3. Appareil selon la revendication 1 ou 2, **caractérisé en ce que** l'adhésif (23) est interposé entre l'armature (20b) et le panneau de couverture (20a), dans la proximité des bords du panneau composite (20), et **en ce que** les moyens (33) de chauffage par induction comportent un outil de chauffage tubulaire (36) qui s'étend dans la proximité des parties du bord périphérique (22) du panneau composite (20) dans lesquelles ledit adhésif (23) est appliqué.

4. Appareil selon la revendication 3, **caractérisé en ce que** l'outil de chauffage tubulaire (36) est conformé d'une manière correspondant au bord périphérique (22) du panneau composite (20), et est agencé de telle sorte qu'il entoure complètement ou seulement quelques longueurs d'un tel bord (22).

5. Appareil selon la revendication 3 ou 4, **caractérisé en ce que** l'outil de chauffage tubulaire (36) est interposé entre la structure de support (16, 18) et les moyens de soudage (26), et **en ce qu'**il est agencé de manière à être plus près du bord du panneau (20) afin d'être substantiellement séparé des moyens de soudage (26).

6. Procédé pour fixer les éléments d'un panneau pour une carrosserie de véhicule à moteur, comportant les étapes consistant à :
- agencer un panneau composite (20) se composant au moins de deux éléments de tôle (20a, 20b) destinés à être fixés l'un à l'autre, en particulier comprenant une armature (20b) et un panneau de couverture (20a), lesdits éléments (20a, 20b) étant pré assemblés par des parties d'assemblage (22) au niveau de leurs bords périphériques, un adhésif polymère (23) étant interposé entre les éléments de tôle (20a, 20b) au moins en certaines parties de leurs bords,
- agencer le panneau composite (20) avec les éléments respectifs (20a, 20b) pré-assemblés, sur une structure de support de forme correspondante (16, 18) d'un appareil (10),
- immobiliser les éléments (20a, 20b) du panneau composite (20) dans une position de préréglage à l'aide de moyens (24) de référence et d'immobilisation associés audit appareil (10), afin d'assurer le positionnement et l'immobilisation réciproque desdits éléments (20a, 20b) dans leur état d'assemblage par rapport à ladite structure de support (16, 18),
- souder les éléments (20a, 20b) du panneau composite (20) en des zones prédéterminées par des moyens de soudage (26) associés audit appareil (10),
- chauffer le panneau composite (20) en des parties de celui-ci dans lesquelles ledit adhésif polymère (23) est situé, par les moyens (33) de chauffage par induction associés à la structure de support (16, 18), et
- commander par une unité de commande électronique le fonctionnement d'au moins lesdits moyens (33) de chauffage par induction, pendant que les éléments de tôle (20a, 20b) sont immobilisés par ledit dispositif (24) de référence et d'immobilisation, pour qu'ils atteignent une température telle que l'adhésif (23) soit porté seulement à un état de pré-polymérisation.

7. Procédé selon la revendication 6, **caractérisé en ce que** l'étape de chauffage des parties du panneau composite (20) dans lequel l'adhésif polymère (23) est situé, est exécutée juste après l'étape de soudage.

8. Procédé selon la revendication 7, **caractérisé en ce que** l'étape de chauffage du panneau composite (20) est exécutée sur une partie ou sur la totalité du bord périphérique dudit panneau.

9. Procédé selon l'une quelconque des revendications 6 à 8, **caractérisé en ce que** ledit boîtier de commande électronique actionne également le dispositif (24) de référence et d'immobilisation, les moyens de soudage ainsi que les moyens (33) de chauffage par induction, d'une façon coordonnée et selon des synchronisations préréglées.

10. Procédé selon l'une quelconque des revendications 6 à 9, **caractérisé en ce qu'**il est mis en oeuvre dans un appareil (10) selon l'une quelconque des revendications 1 à 5.
